# EUROPEAN PATENT SPECIFICATION

(11) **EP 1 209 487 B1**
(45) Date of publication and mention of the grant of the patent: **27.10.2010**
(21) Application number: 01127862.9
(22) Date of filing: 22.11.2001
(51) Int. Cl.: G01S 17/46, G01S 7/486

(54) **Method and device for detection of an object, with background elimination**
Verfahren und Vorrichtung zur Erfassung von Objekten, mit Hintergrundausblendung
Procédé et dispositif pour la détection d'un objet, à suppression du bruit de fond

(30) Priority: 24.11.2000 IT BO000691
(43) Date of publication of application: 29.05.2002
(73) Proprietor: Datalogic Automation S.r.l., Monte San Pietro (BO) (IT)
(72) Inventor: Giovannardi, Fabio, 40129 BOLOGNA (IT)
(74) Representative: Bongiovanni, Simone

(56) References cited:
- EP-A- 0 685 748
- DE-A- 4 311 691
- US-A- 5 225 689

## Description

The present invention relates to a method and to a device for detection of an object, with background elimination.

As is known, a photoelectric sensor, which can detect the presence of an object within a pre-determined interval of distances, normally indicated by the term "field", is generally known as a background elimination device.

In particular, the background elimination device can detect the presence of an object within an interval of distances contained between the background elimination device itself and a pre-determined limit threshold, beyond which the presence of any object is ignored.

It is known that the background elimination devices comprise a photoemitter, which can emit a beam of light pulses in a specific direction for detection of objects, a photoreceiver of the PSD (Position Sensitive Device) type, which, via an optical triangulation system, can receive partially the beam of light pulses reflected by an object, in order to supply as output a first and a second electrical signal, the values of which together have correlation with the position of the beam of pulses which meets a surface presented by the photoreceiver.

The background elimination device additionally comprises a switching circuit, which is connected to the photoreceiver, and can process the first and second electrical signals, in order to supply as output an information signal, the logic state of which indicates the presence or absence of an object within the "field".

In detail, the switching circuit comprises an amplification stage, which is connected to the photoreceiver, and can amplify and/or attenuate selectively the first and/or the second signal, such as to permit regulation of the limit threshold, a high-gain differential stage, which is connected to the amplification stage, and can supply as output a differential electrical signal, the value of which is determined by the difference between the first and the second signal, and a comparator stage, which is connected to the differential stage, and, according to the comparison between the value of the differential signal and a pre-defined switching threshold, can supply as output the electrical information signal, which has alternatively a first or a second logic state, indicating respectively the presence or absence of any object within the "field".

In greater detail, if the value of the differential signal is greater than the value of the switching threshold (set to a value other than zero), the information signal which is generated by the comparator device has the first logic state, whereas otherwise the information signal has the second logic state.

In other words, the condition according to which the information signal goes from one logic state to the other defines the limit threshold present between the "field" and an interval of non-detection, which extends between the limit threshold and infinity.

Although the above-described background elimination devices are structurally simple and economical, they have the disadvantage that they are inaccurate in detection of objects of a different colour disposed at the limit threshold, since the switching between the two aforementioned logic states, i.e. the information concerning the presence/absence of the object within the "field" is influenced by the reflective power of the object itself.

In other words, the background elimination device can or can not detect an object located at the limit threshold, according to its reflective power.

It is known that a reduction to zero of the switching threshold of the comparator stage gives rise to a reduction in the inaccuracy of the background elimination device.

However, with the background elimination devices currently available, it is not possible to use zero as a discriminating value in the comparator stage, since this value corresponds to two operative conditions which differ from one another.

In a first condition, the photoreceiver supplies as output a single value other than zero, of the first and of the second signal. This condition signifies that the object is present at the limit threshold.

In a second condition, the photoreceiver supplies as output a single value of zero, of the first and of the second signal. This condition occurs in the absence of objects.

In both the above-described conditions, the comparator stage receives as input a differential signal with a value of zero, giving rise to a state of indeterminateness or instability of the background elimination device.

In other words, when the switching threshold of the comparator stage is set to zero, a condition arises in the background elimination device, in which the absence or presence of the object at the limit threshold is not distinguished.

DE4311691 discloses a method for adjusting an optical distance probe consists in that the output currents of a position-sensitive optodetector are controllably amplified and the difference between the amplified output currents is made to vanish by appropriately controlling the amplification.

US5225689 discloses a reflected light sensor having a light transmitter including at least two mutually independent light sources and a light receiver including at least two separately evaluatable photosensitive elements. A switching point or distance limit of the light sensor can be continuously varied within a defined sensing range by inversely and continuously controlling currents of the light sources in accordance with a control voltage USt, LED, or by continuously varying a first and a second independent control voltage thereby controlling gains of signals at the output of the photosensitive elements.

The object of the present invention is thus to provide a background elimination device which is free from the above-described disadvantages.

According to the present invention, a background elimination device is provided, as described in claim 1.

According to the present invention, a method for detection of an object, with background elimination, is provided, as described in claim 11.

The present invention will now be described with reference to the attached drawings, which illustrate a non-limiting embodiment of it, in which:
figure 1 illustrates schematically a background elimination device produced according to the dictates of the present invention;
figure 2 shows a flow diagram of the functioning of the background elimination device illustrated in figure 1;
figure 3 represents schematically the background elimination device according to a second embodiment;
figure 4 represents schematically the background elimination device according to a third embodiment; and
figure 5 represents schematically the background elimination device according to a fourth embodiment.

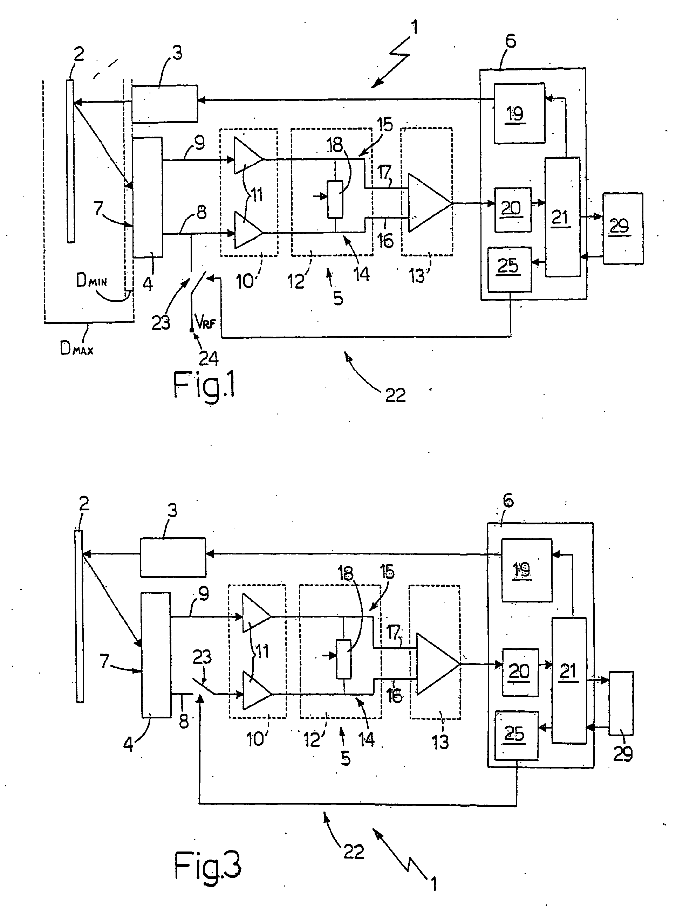

With reference to figure 1, 1 indicates as a whole a background elimination device which can detect the presence of an object 2 within a pre-determined interval of distances.

In detail, this pre-determined interval of distances is generally known as the "field", and is defined by the space contained between a minimum distance Dmin, and a maximum distance Dmax, measured from the background elimination device 1.

In greater detail, the background elimination device 1 can ignore the presence of any object which is located at a distance shorter than the minimum distance Dmin, or at a distance greater than the maximum distance Dmax, which will be indicated hereinafter as the "limit threshold".

The background elimination device 1 comprises an optoelectronic device for emission of light, in this case a photoemitter 3, which can generate as output, in a pre-determined direction, and according to a control signal received as input, a light beam comprising a sequence of light pulses; and an optoelectronic reception device, in this case a photoreceiver 4, which, via an optical triangulation system, can receive the light beam reflected by the object 2, in order to supply as output a pair of electrical position signals, the values of which together have correlation with the distance of the object 2 itself, measured relative to the background elimination device 1.

The background elimination device 1 additionally comprises a differential circuit 5, which is connected downstream from the photoreceiver 4, and can process the pair of electrical position signals supplied by the photoreceiver 4 itself, in order to supply as output a differential signal which has a value indicative of the distance of. the object 2; and a processing device 6, which can receive the differential signal, and compare it with a pre-determined switching signal, in order to supply as output an information signal which has a first, or alternatively a second logic state, indicating respectively a condition of presence or absence of the object 2 within the "field".

The photoreceiver 4 is advantageously defined by a sensor of a known type, generally indicated by the abbreviation "PSD" (Position Sensitive Device), which has a surface 7 which is sensitive to the position of the incident light beam, and comprises a first and second output terminal 8, 9.

In detail, the photoreceiver 4 can supply at the first and second terminals 8, 9, respectively a first and a second electrical position signal, the (current) values of which together have correlation with the position of incidence on the surface 7 of the light beam reflected by the object 2.

In greater detail, the photoreceiver 4 is positioned relative to the photoemitter 3, such as to provide accurate optical triangulation of the light beam for emission and reception, thus defining a univocal ratio between the position of the point of incidence of the light beam on the surface 7 of the photoreceiver 4, and the distance of the object 2 measured relative to the background elimination device 1.

This ratio thus provides a correlation between the distance of the object 2 from the background elimination device 1, and the two values relative to the first and second position signals.

The differential circuit 5 comprises an amplification stage 10, which is of a known type, and can be defined for example by a pair of amplification circuits 11 (illustrated schematically), which can receive as input respectively the first and the second position signal, in order to provide amplification of the latter as output; and a regulator stage 12, which is connected to the photoreceiver 4 via the amplification stage 10, and can permit regulation of the "limit threshold".

The differential circuit 5 additionally comprises a differential stage 13, which is connected downstream from the regulator stage 12, from which it receives the first and the second position signal, and can supply as output the differential signal, which is determined by the amplification of the difference of potential present between the first and the second signal.

In other words, the amplification stage 10 and the regulator stage 12 define a first and a second amplification "channel" 14, 15 with variable gain, which connect the input terminals of the differential stage 13 to the output terminals of the photoreceiver 4, i.e. which connect the first and second output terminals 8, 9 of the photoreceiver 4, respectively to a first and a second input terminal 16, 17 of the differential stage 13.

The regulator stage 12 comprises a variable resistance resistor 18 (indicated schematically) of a known type, for example a manual regulation multi-revolution unit or a digital trimmer, by means of which it is possible to control the variation of the "limit threshold" in a known manner, by means of unbalancing of the amplification in the first and second amplification channels 14, 15.

At the first and second terminals 16, 17, the differential stage 13 receives the first and second suitably unbalanced position signals of the regulator stage 12, and supplies the processing device 6 with the differential signal.

The processing device 6 comprises a synchronisation unit 19, which can generate the control signal which controls the emission of the light pulses from the photoemitter 3, and a comparison unit 20, which can receive the differential signal, and compare the latter with the switching threshold, such as to supply as output a detection signal, the logic state of which indicates the presence or absence of the object 2 within the "field".

In detail, the comparison unit 20 has a switching threshold which has a pre-determined reference voltage, which for example is zero, and, according to the voltage value of the differential signal, controls the transition of the detection signal from one logic state to the other.

The processing device 6 additionally comprises a central control unit 21, which can coordinate and control the operations carried out both by the comparison unit 20, and by the synchronisation unit 19.

In particular, the central control unit 21 can receive the detection signal from the comparison unit 20, in order to. supply as output the information signal which indicates the presence/absence of the object within the "field".

Preferably, but not necessarily, the background elimination device 1 can be provided with an interface unit 29, which cooperates with the processing device 6, and can permit variation of the resistance of the resistor 18.

The interface unit 29 can advantageously be defined by a circuit of a known type, comprising a regulation push button and a display unit which can display the value of the "limit threshold".

The background elimination device 1 is also provided with a preliminary search circuit, which can search for the presence/absence of an object at the background elimination device 1, before the latter carries out the detection of the arrangement of the object within the "field".

In particular, the preliminary search circuit is defined by a sensing circuit 22, comprising a switch 23, which is connected between the first output terminal 8 of the photoreceiver 4, and a ground terminal 24, which has a pre-determined potential V_{RF} (for example a ground potential of V_{RF}=0).

Finally, the background elimination device 1 is provided with a selection unit 25, which cooperates with the central control unit 21, and can control selectively the opening/closure of the switch 23, thus giving rise to selection of one of the following functioning modes of the background elimination device 1.

A "background elimination" functioning mode, in which the background elimination device 1 can detect the presence/absence of an object 2 within the pre-determined "field", i.e. which can detect the arrangement of the object 2 itself, by measuring the distance, and comparing the latter with the limit threshold.

A "sensing" functioning mode, in which the background elimination device 1 can carry out a preliminary search, in order to detect only the presence or absence of an object 2, independently from the distance of the latter.

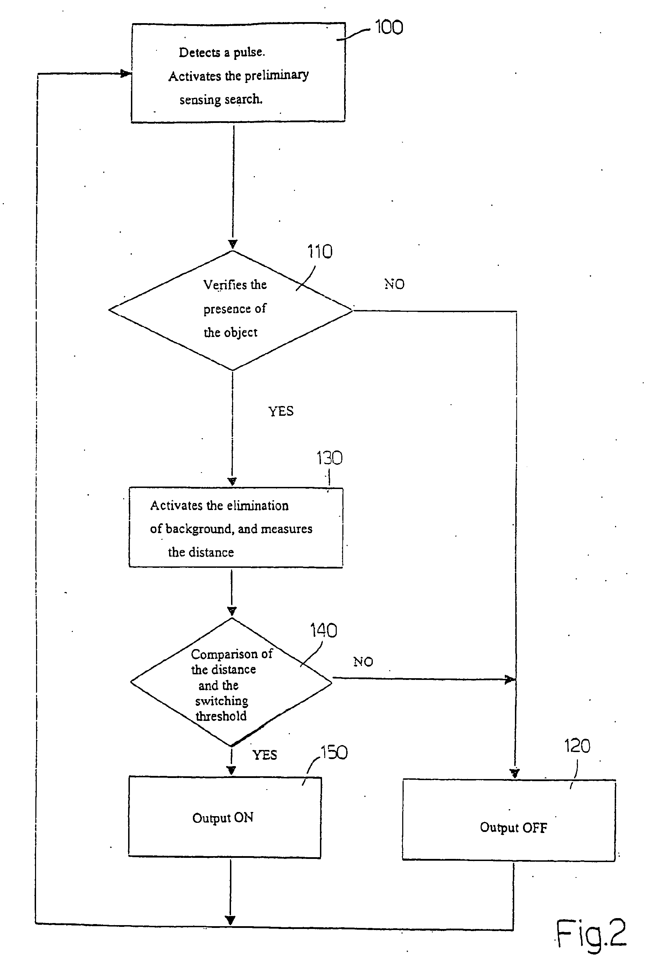

The functioning of the background elimination device 1 will now be described with reference to figure 2.

Let it be assumed that, initially, the "limit threshold" has been pre-determined by means of corresponding regulation of the variable resistance resistor 18, and the background elimination device 1 is in the "background elimination" functioning mode.

Initially, block 100 is reached, in which, via the photoemitter 3, the central control unit 21 commands emission of a beam of light pulses; for the sake of descriptive simplicity, the emission of a sequence defined by a first and a second pulse is taken into consideration.

In block 100, via the selection unit 25, the central control unit 21 commands closure of the switch 23, thus giving rise to transition of the background elimination device 1 from the "background elimination" functioning mode to the "sensing" functioning mode, in which the preliminary search for the object 2 is activated.

Block 100 is followed by block 110, in which the presence/absence of an object is verified.

In detail, in the "sensing" functioning mode, closure of the switch 23 gives rise to "exclusion" of the first channel, i.e. to "setting" of the pre-determined potential V_{RF} (for example zero), at the first position signal at the first input terminal 16 of the differential stage 13; in this condition, the functioning of the differential circuit 5 is limited to amplification of the second channel 15, since the differential signal output by the differential stage 13 corresponds to the difference between the value of the second signal, suitably amplified, and the pre-determined potential V_{RF}.

Thus, if, for example, the potential VRF is set to zero, after an object has been detected, the background elimination device 1 has the second signal, and thus the differential signal, with a value other than zero, whereas in the opposite case, i.e. in the absence of objects, the second signal, and thus the differential signal, have a value of zero.

By this means, by comparison between the differential signal and the switching threshold, the comparison unit 20 can provide an indication of presence or absence of the object 2.

In greater detail, the central control unit 21 verifies the logic state of the detection signal. If the detection signal has the logic state which indicates the absence of objects, block 110 is followed by block 120, in which, via the information signal, the central control unit 21 provides an indication of the absence of objects.

Preferably, but not necessarily, in this case, any subsequent analysis of the second pulse emitted by the photoemitter 3 is prevented, since the lack of objects at any distance has been ascertained via block 110.

Block 120 is followed by block 100, in which a new emission cycle, and thus new "sensing", is reiterated.

If the detection signal has the logic state which indicates the presence of an object, block 110 is followed by block 130, in which, via the selection unit 25, the central control unit 21 commands opening of the switch 23, and thus transition from the "sensing" functioning mode to the "background elimination" functioning mode.

In block 130, the background elimination device 1 detects the second light pulse.

Opening of the switch 23 makes it possible to determine the distance of the object 2 from the background elimination device 1.

Block 130 is followed by block 140, in which it is verified whether the object 2 detected is disposed within the "field".

In particular, after reception of the second light pulse (block 130), the photoreceiver 4 supplies as input to the differential circuit 5 the first and second signals, which are amplified in the two respective channels 14, 15, and are supplied to the input of the differential stage 13, which supplies the differential signal as output.

At this point (block 140), the comparison unit 20 carries out the comparison between the differential signal and the switching threshold, supplying as output the detection signal by means of which the central control unit 21 is able to supply the information signal which indicates the absence or presence of the object 2 in the "field".

In particular, if the central control unit 21 verifies the presence of the object 2 within the "field", block 140 is followed by block 150, whereas otherwise, block 140 is followed by block 120.

Block 150 is followed by block 100, in which a new detection cycle is reiterated.

On the basis of the foregoing description, it should be emphasised that the condition of "setting" the pre-determined potential V_{RF} in the first channel, which gives rise to transition from the "background elimination" functioning mode to the "sensing" functioning mode, can be obtained by setting the pre-determined potential V_{RF} at any point of the first amplification channel, i.e. by connecting the switch 23 between any point of the first amplification channel 14 and the terminal 24.

In this case, for example, the switch 23 can be connected between the terminal 24 and a connection point contained between the amplification stage 10 and the regulator stage 12, or between the terminal 24 and the first input terminal 16 of the differential stage 13.

On the basis of the foregoing description, it should also be emphasised that the transition from the "background elimination" functioning mode, to the "sensing" functioning mode, can be obtained by setting the pre-determined potential V_{RF} at any point of the second amplification channel, i.e. by connecting the switch 23 between any point of the second amplification channel 14 and the terminal 24.

In this case, the presence/absence of the object is detected by means of processing of the first signal, whereas the pre-determined potential V_{RF} is set at the second signal, by means of the "exclusion" of the second channel 15.

According to the variant illustrated in figure 3, the background elimination device 1 has a circuit configuration in which the switch 23 of the sensing circuit 22 has one terminal which is connected to an input of the differential circuit 5, and the opposite terminal which is connected to the first output terminal 8 of the photoreceiver 4.

Similarly to the above-described functioning, via the selection unit 25, the central control unit 21 commands closure/opening of the switch 23, thus giving rise to transition of the background elimination device 1 from the "background elimination" functioning mode, to the "sensing" functioning mode.

In detail, in this case, opening of the switch 23 gives rise to "setting" of a zero value (of current or voltage) in the first channel 14, and consequently, in this case also, similarly to the above-described functioning, to the amplification and processing of a differential signal which contains only the information concerning the presence/absence of an object supplied by the second channel 15.

On the basis of the foregoing description, it should be emphasised that the condition of "setting" a zero value (of current or voltage) in the first channel 14, which gives rise to transition from the "background elimination" functioning mode to the "sensing" functioning mode, can be obtained by interrupting the passage of current at any point of the first amplification channel; consequently, the switch 23 can be positioned at any point of the first amplification channel 14.

In this case, for example, the switch 23 can be interposed between the amplification stage 10 and the regulator stage 12, or between the first input terminal 16 of the differential stage 13, and an output of the regulator stage 12.

As an alternative to the first channel 14, the switch 23 can be connected at any point of the second amplification channel 15, thus giving rise to the same functioning of the background elimination device 1.

It will be appreciated that in this case, a potential with a value of zero is set at the second signal, whereas only the first signal is amplified and processed, such as to detect the presence of the object.

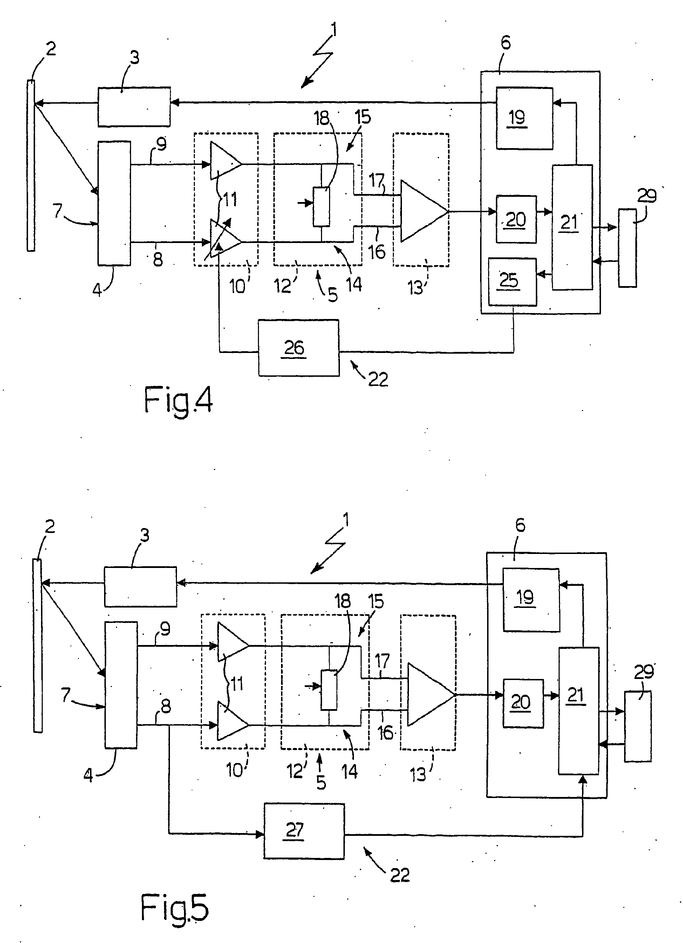

According to the variant illustrated in figure 4, the sensing circuit 22 of the background elimination device 1 does not have the switch 23, and has an unbalance device 26, which can vary the amplification of the first channel 14 according to a control signal supplied by the selection unit 25.

In particular, similarly to the variants previously described, in which the "sensing" functioning mode is controlled by setting a pre-determined potential V_{RF}, of, for example, zero, at any point of the first amplification channel 14, this condition can be obtained, for example, by means of strong attenuation of the first signal, implemented by means of the unbalance device 26.

In this case also, the second signal is processed, whereas the first signal is excluded by setting a pre-determined potential V_{RF} in the first channel.

In this case, the attenuation can be obtained, for example, by means of regulation of the gain of one of the amplifiers 11 (illustrated schematically), which are present in the amplification stage 10, or by means of corresponding regulation of the differential stage 13.

According to the variant illustrated in figure 5, in comparison with the variant illustrated in figure 4, the sensing circuit 22 of the background elimination device 4 does not have either the unbalance device 26 or the selection unit 25, and is provided with a measuring unit 27, which can detect the value of the first signal present at the output terminal 8 of the photoreceiver 4, in order to supply to the central control unit 21 a signal which indicates the presence/absence of an object.

In use, in the "sensing" functioning mode, via the measuring device 27, the background elimination device 1 measures the value of the signal at the first terminal 8, and if the presence of the object is detected, it changes to the "background elimination" functioning mode.

In detail, if the value of the first signal is zero, the measuring device 27 sends a signal which indicates the absence of an object 2, to the central control unit 21, which supplies as output the information signal which indicates the absence of the object 2 within the "field", whereas in the opposite case, i.e. if the value of the first signal is other than zero, the measuring device 27 sends a signal which indicates the presence of an object, to the central control unit 21, which commands transition of the background elimination device 1 to the "background elimination" functioning mode, in which, similarly to the above-described variants, it is verified whether the object 2 is within or outside the "field".

On the basis of the foregoing description, it should be emphasised that the measuring device 27 can detect the first signal at any point of the first amplification channel 14.

It should also be emphasised that, as an alternative to the detection of the first signal, the measuring device 27 can detect the second signal at any point of the second amplification channel 15.

Finally, the measuring device 27 can be connected to the first and second amplification channels 14, 15, in order to detect and process the values respectively of the first and second signals, such as to supply to the central control unit 21 a signal which indicates the presence/absence of the object.

The background elimination device 1 has the advantage that it is accurate, i.e. it can switch the information signal which indicates the presence/absence of the object within the "field", according to the distance of the object to be detected, and independently from the reflective power of the latter.

Finally, the background elimination device 1 has the advantage that it is structurally simple and economical.

In particular, the background elimination device 1 can make a direct comparison between the information obtained during the "background elimination" functioning mode, and during the "sensing" functioning mode.

In detail, the background elimination device 1 can check that the items of information are compatible with one another; for example if they are in use, during the "background elimination" functioning mode and in the "sensing" functioning mode, there is detection respectively of the presence of an object or absence of an object within the "field", and the background elimination device 1 supplies as output the absence of the object within the "field", whereas if the information is compatible, the background elimination device 1 supplies as output the information signal obtained during the "background elimination" functioning mode.

Furthermore, the "sensing" functioning mode can precede or follow the "background elimination" functioning mode.

In this case also, the comparison between the information obtained in the two functioning modes (and thus the indication of the presence/absence of the object within the "field") is carried out after the "sensing" and "background elimination" functioning modes.

## Claims

1. Background elimination device (1) for detecting the presence of an object within a pre-determined interval of distances contained between the background elimination device (1) itself and a pre-determined limit threshold;
the background elimination device (1) comprises:
- a photoemitter (3) which emits a beam of light pulses in a pre-determined direction;
- a photoreceiver (4) which receives a beam of light pulses reflected by an object and supplies as output a pair of position signals which indicate the distance of the object (2) from the background elimination device (1); said photoreceiver (4) having a surface (7) which is sensitive to the position of the incident light beam and comprises a first and second output terminal (8,9) to provide for said position signals;
- a pair of amplification channels (14, 15), which amplifies said position signals, and processing means (6) which receives said position signals from the photoreceiver (4) via the amplification channels (14, 15), and, according to the position signals supply as output a first information signal which indicates the arrangement of an object (2) within said pre-determined interval of distances;
the background elimination device (1) being **characterised in that** it comprises:
- preliminary search means (22) which process temporarily only one of the position signals in order to supply as output a second information signal which indicates only the presence/absence of an object (2) independently from the distance of the object (2) from the background elimination device (1); and
- means for carrying out a comparison between the first and the second information signal, in order to verify the arrangement of the object within said pre-determined interval of distances .

2. Background elimination device according to claim 1, **characterised in that** said preliminary search means (22) comprise unbalance means (26) and selection means (25) which controls the unbalance means (26) in order to exclude temporarily one of said amplification channels (14, 15) and to set one of the said position signals to a pre-determined value (V_{RF}); said processing means (6) being able to supply the second information signal, which indicates the presence/absence of an object (2), as output, by means of processing of the position signal present in the unaltered channel (15, 14).

3. Background elimination device according to claim 1, **characterised in that** said preliminary search means (22) comprise switch means (23), and selection means (25) which can switch the said switch means (23), in order to exclude one of the said amplification channels temporarily (14, 15), and to set one of the said position signals to a pre-determined value (V_{RF}); said processing means (6) being able to supply the second information signal which indicates the presence/absence of an object (2), as output, by means of processing of the position signal present in the included channel (15, 14).

4. Background elimination device according to claim 3, **characterised in that** said selection means (25) command opening of one of the said amplification channels (14, 15) selectively, by switching of the said switch means (23) to exclude said amplification channel (14, 15) itself.

5. Background elimination device according to claim 4, wherein said switch means (23) comprise a switch (23), which is connected between an output terminal (8) of the photoreceiver (4) and one of said amplification channels (14, 15).

6. Background elimination device according to claim 3, **characterised in that** the said selection means (25) commands closure at a pre-determined potential (V_{RF}) of one of the said amplification channels (14, 15), selectively, by switching of the said switch means (23) for excluding said amplification channel (14, 15).

7. Background elimination device according to claim 6, wherein said switch means (23) comprise a switch (23), which is connected between a output terminal (8) of the photoreceiver (4) and a ground terminal (24) having a pre-determined potential (V_{RF}).

8. Background elimination device according to claim 3, wherein said selection means (25), controls selectively the opening/closure of the switch means (23), for selecting of one of the following functioning modes:
a background elimination functioning mode, in which the background elimination device (1) detects the presence/absence of an object (2) within said pre-determined interval of distances; and a sensing functioning mode, in which the background elimination device (1) carry out a preliminary search, in order to detect only the presence/absence of an object (2), independently from the distance of the object from the background elimination device 1.

9. Background elimination device according to claim 1, **characterised in that** the preliminary search means (22) comprise measurement means (27) which are connected to one of the amplification channels (14, 15), in order to measure the respective position signal; said measurement means (27) being able to process the position signal measured in order to supply to the said processing means (6) said second information signal which indicates the absence/presence of an object independently from the distance of the object (2) from the background elimination device.

10. Method for detecting the presence/absence of an object within a pre-determined interval of distances comprising the following steps:
- emitting by a photoemitter (3) a beam of light pulses in a pre-determined direction;
- receiving by a photoreceiver (4) a beam of light reflected by an object, in order to supply as output a pair of position signals which indicate the distance of an object relative to a pre-determined point of reference; said photoreceiver (4) having a surface (7) which is sensitive to the position of the incident light beam and comprises a first and second output terminal (8, 9) to provide for said position signals;
- processing (140) said position signals in order to supply as output a first information signal which indicates the arrangement of an object (2) within said pre-determined interval of distances;
the method being **characterised in that** it comprises the following steps:
- carrying out a preliminary search (110) for the object in which only one of the said position signals is processed in order to supply as output a second information signal, which indicates only the presence/absence of an object independently from the distance of the object (2) from said pre-determined point of reference; and
- carrying out a comparison between the first and the second information signal, in order to verify the arrangement of the object within said pre-determined interval of distances.

11. Method according to claims 10, **characterised in that** said preliminary search step (110) comprises the step of altering one of the said position signals in order to set it to a pre-determined value signal (V_{RF}).

12. Method according to claim 10 or 11, **characterised in that** said preliminary search step (110) comprises the step of opening by switching means (23) a output terminal 8 of the photoreceiver 4.

13. Method according to claim 10 or 11, **characterised in that** said preliminary search step (110) comprises the step of connecting by switching means (23) a output terminal (8) of the photoreceiver (4) to a terminal (24) having a pre-determined potential (V_{RF}).

14. Method according to claim 10, **characterised in that** said preliminary search step (110) comprises the step of measuring one of said position signals.

15. Method according to any one of claims 10 to 14, **characterised in that** said preliminary search step (110) precedes the step of processing (140) the position signals.

16. Method according to any one of claims 10 to 15, **characterised in that** the said step of processing (140) the pair of position signals is carried out according to the indication of presence of the second information signal.

17. Method according to claim 14, **characterised in that**, if said preliminary search step (110) detect that the object is present, said preliminary search step (110) is followed by said step of processing (140) the pair of position signals, in order to supply as output the first information signal which indicates the arrangement of an object (2) within said pre-determined interval of distances.

## Patentansprüche

1. Hintergrundeliminierungsvorrichtung (1) zum Detektieren der Anwesenheit eines Objektes innerhalb eines vorher bestimmten Intervalls von Distanzen, die zwischen der Hintergrundeliminierungsvorrichtung (1) selbst und einer vorbestimmten Grenzschwelle vorhanden sind;
wobei die Hintergrundeliminierungsvorrichtung (1) Folgendes aufweist:
einen Fotoemitter (3), der einen Strahl von Lichtimpulsen in einer vorher bestimmten Richtung emittiert;
einen Fotoempfänger (4), der einen Strahl von Lichtimpulsen empfängt, die von einem Objekt reflektiert werden, und als Ausgangsgröße ein Paar von Positionssignalen liefert, die die Distanz des Objektes (2) von der Hintergrundeliminierungsvorrichtung (1) anzeigen; wobei der Fotoempfänger (4) eine Oberfläche (7) hat, die empfindlich für die Position des auftreffenden Lichtstrahls ist und einen ersten und einen zweiten Ausgangsanschluss (8, 9) aufweist, um die Positionssignale zu liefern:
ein Paar von Verstärkungskanälen (14, 15), welches die Positionssignale verstärkt, und Verarbeitungsmittel (6), die die Positionssignale vom Fotoempfänger (4) über die Verstärkungskanäle (14, 15) empfangen, und die gemäß den Positionssignalen als Ausgangsgröße ein erstes Informationssignal liefern, welches die Anordnung eines Objektes (2) innerhalb des vorbestimmten Intervalls von Distanzen anzeigt; wobei die Hintergrundeliminierungsvorrichtung **dadurch gekennzeichnet ist, dass** sie Folgendes aufweist:
Vorsuchmittel (22), die temporär nur eines der Positionssignale verarbeiten, um als Ausgangsgröße ein zweites Informationssignal zu liefern, welches nur die Anwesenheit/Abwesenheit eines Objektes (2) unabhängig von der Distanz des Objektes (2) von der Hintergrundeliminierungsvorrichtung (1) anzeigt; und
Mittel zum Ausführen eines Vergleichs zwischen dem ersten und dem zweiten Informationssignal, um die Anordnung des Objektes innerhalb des vorbestimmten Intervalls von Distanzen zu überprüfen.

2. Hintergrundeliminierungsvorrichtung nach Anspruch 1, die **dadurch gekennzeichnet ist, dass** die Vorsuchmittel (22) Ungleichgewichtsmittel (26) und Auswahlmittel (25) aufweisen, die die Ungleichgewichtsmittel (26) steuern, um temporär einen der Verstärkungskanäle (14, 15) auszuschließen und eines der Positionssignale auf einen vorbestimmten Wert (V_{RF}) zu setzen; wobei die Verarbeitungsmittel (6) fähig sind, das zweite Informationssignal, welches die Anwesenheit/Abwesenheit eines Objektes (2) anzeigt, als Ausgangsgröße zu liefern, und zwar durch Verarbeitung des Positionssignals, welches in dem nicht veränderten Kanal (15, 14) vorhanden ist.

3. Hintergrundeliminierungsvorrichtung nach Anspruch 1, **dadurch gekennzeichnet, dass** die Vorsuchmittel (22) Schaltmittel (23) und Auswahlmittel (25) aufweisen, die die Schaltmittel (23) schalten können, um einen der Verstärkungskanäle (14, 15) temporär auszuschließen, und um eines der Positionssignale auf einen vorbestimmten Wert (V_{RF}) zu setzen; wobei die Verarbeitungsmittel (6) fähig sind, das zweite Informationssignal, welches die Anwesenheit/Abwesenheit eines Objektes (2) anzeigt, als Ausgangsgröße zu liefern, und zwar durch Verarbeitung des Positionssignals, welches in dem eingeschlossenen Kanal (15, 14) vorhanden ist.

4. Hintergrundeliminierungsvorrichtung nach Anspruch 3, **dadurch gekennzeichnet, dass** die Auswahlmittel (25) das selektive Öffnen von einem der Verstärkungskanäle (14, 15) anweisen, und zwar durch Schalten der Schaltmittel (23), um den Verstärkungskanal (14, 15) selbst auszuschließen.

5. Hintergrundeliminierungsvorrichtung nach Anspruch 4, wobei die Schaltmittel (23) einen Schalter (23) aufweisen, der zwischen einem Ausgangsanschluss (8) des Fotoempfängers (4) und einem der Verstärkungskanäle (14, 15) angeschlossen ist.

6. Hintergrundeliminierungsvorrichtung nach Anspruch 3, **dadurch gekennzeichnet, dass** die Auswahlmittel (25) das Schließen von einem der Verstärkungskanäle (14, 15) bei einem vorbestimmten Potenzial (V_{RF}) selektiv anweisen, und zwar durch Schalten der Schaltmittel (23) zum Ausschließen des Verstärkungskanals (14, 15).

7. Hintergrundeliminierungsvorrichtung nach Anspruch 6, wobei die Schaltmittel (23) einen Schalter (23) aufweisen, der zwischen einem Ausgangsanschluss (8) des Fotoempfängers (4) und einem Erdungsanschluss (24) mit einem vorbestimmten Potenzial (V_{RF}) angeschlossen ist.

8. Hintergrundeliminierungsvorrichtung nach Anspruch 3, wobei die Auswahlmittel (25) selektiv das Öffnen/Schließen der Schaltmittel (23) steuern, um einen der folgenden Betriebszustände auszuwählen:
einen Hintergrundeliminierungsbetriebszustand, in dem die Hintergrundeliminierungsvorrichtung (1) die Anwesenheit/Abwesenheit eines Objektes (2) in dem vorbestimmten Intervall von Distanzen detektiert;
und einen Abfühlbetriebszustand, in dem die Hintergrundeliminierungsvorrichtung (1) eine Vorsuche ausführt, um nur die Anwesenheit/Abwesenheit eines Objektes (2) unabhängig von der Distanz des Objektes von der Hintergrundeliminierungsvorrichtung (1) auszuführen.

9. Hintergrundeliminierungsvorrichtung nach Anspruch 1, **dadurch gekennzeichnet, dass** die Vorsuchmittel (22) Messmittel (27) aufweisen, die mit einem der Verstärkungskanäle (14, 15) verbunden sind, um das jeweilige Positionssignal zu messen; wobei die Messmittel (27) geeignet sind, um das gemessene Positionssignal zu verarbeiten, um das erwähnte zweite Informationssignal zu den Verarbeitungsmitteln (6) zu liefern, welches die Anwesenheit/Abwesenheit eines Objektes unabhängig von der Distanz des Objektes (2) von der Hintergrundeliminierungsvorrichtung anzeigt.

10. Verfahren zum Detektieren der Anwesenheit/Abwesenheit eines Objektes innerhalb eines vorbestimmten Intervalls von Distanzen, welches Folgende Schritte aufweist:
Aussenden eines Strahls von Lichtimpulsen in einer vorbestimmten Richtung durch einen Fotoemitter (3);
Empfangen eines Lichtstrahls, der von einem Objekt reflektiert wurde, mit einem Fotoempfänger (4), um als Ausgangsgröße ein Paar von Positionssignalen zu liefern, welche die Distanz eines Objektes relativ zu einem vorbestimmten Referenzpunkt anzeigen; wobei der Fotoempfänger (4) eine Oberfläche (7) hat, die empfindlich für die Position des auftreffenden Lichtstrahls ist, und einen ersten und einen zweiten Ausgangsanschluss (8, 9) aufweist, um die Positionssignale zu liefern;
Verarbeiten (140) des Positionssignals, um als eine Ausgangsgröße ein erstes Informationssignal zu liefern, welches die Anordnung eines Objektes (2) innerhalb des vorbestimmten Intervalls von Distanzen anzeigt;
wobei das Verfahren **dadurch gekennzeichnet ist, dass** es die folgenden Schritte aufweist:
Ausführen einer Vorsuche (110) für das Objekt, bei der nur eines der Positionssignale verarbeitet wird, um als eine Ausgangsgröße ein zweites Informationssignal zu liefern, welches nur die Anwesenheit/Abwesenheit eines Objektes unabhängig von der Distanz des Objektes (2) von dem vorbestimmten Referenzpunkt anzeigt; und
Ausführen eines Vergleiches zwischen dem ersten und dem zweiten Informationssignal, um die Anordnung des Objektes innerhalb des vorbestimmten Intervalls von Distanzen zu überprüfen.

11. Verfahren nach Anspruch 10, **dadurch gekennzeichnet, dass** der Vorsuchschritt (110) den Schritt aufweist, eines der Positionssignale zu verändern, um es auf einen vorbestimmten Signalwert (V_{RF}) zu setzen.

12. Verfahren nach Anspruch 10 oder 11, **dadurch gekennzeichnet, dass** der Vorsuchschritt (110) den Schritt aufweist, durch Schaltmittel (23) einen Ausgangsanschluss (8) des Fotoempfängers (4) zu öffnen.

13. Verfahren nach Anspruch 10 oder 11, **dadurch gekennzeichnet, dass** der Vorsuchschritt (110) den Schritt aufweist, durch Schaltmittel (23) einen Ausgangsanschluss (8) des Fotoempfängers (4) mit einem Anschluss (24) mit einem vorbestimmten Potenzial (V_{RF}) zu verbinden.

14. Verfahren nach Anspruch 10, **dadurch gekennzeichnet, dass** der Vorsuchschritt (110) den Schritt aufweist, eines der Positionssignale zu messen.

15. Verfahren nach einem der Ansprüche 10 bis 14, **dadurch gekennzeichnet, dass** der Vorsuchschritt (110) dem Schritt der Verarbeitung (140) der Positionssignale vorangeht.

16. Verfahren nach einem der Ansprüche 10 bis 15, **dadurch gekennzeichnet, dass** der Schritt der Verarbeitung (140) des Paares von Positionssignalen gemäß der Anzeige der Anwesenheit des zweiten Informationssignals ausgeführt wird.

17. Verfahren nach Anspruch 14, **dadurch gekennzeichnet, dass** der Schritt der Verarbeitung (140) des Paares von Positionssignalen dem Vorsuchschritt (110) folgt, falls der Vorsuchschritt (110) detektiert, dass das Objekt vorhanden ist, und zwar um als Ausgangsgröße das erste Informationssignal zu liefern, welches die Anordnung eines Objektes (2) innerhalb des vorbestimmten Intervalls von Distanzen anzeigt.

## Revendications

1. Dispositif (1) de suppression de bruit de fond visant à détecter la présence d'un objet à l'intérieur d'un intervalle de distances prédéterminé se trouvant entre le dispositif (1) de suppression de bruit de fond lui-même et un seuil limite prédéterminé ;
le dispositif (1) de suppression de bruit de fond comprend :
- un photoémetteur (3) qui émet un faisceau d'impulsions de lumière dans une direction prédéterminée ;
- un photorécepteur (4) qui reçoit un faisceau d'impulsions de lumière réfléchi par un objet et procure, comme sortie, une paire de signaux de position qui indiquent la distance de l'objet (2) par rapport au dispositif (1) de suppression de bruit de fond ; ledit photorécepteur (4) ayant une surface (7) qui est sensible à la position du faisceau de lumière incidente et comprend une première et une seconde borne de sortie (8, 9) pour fournir lesdits signaux de position ;
- une paire de canaux d'amplification (14, 15), qui amplifient lesdits signaux de position, et un moyen de traitement (6) qui reçoit lesdits signaux de position provenant du photorécepteur (4) à travers les canaux d'amplification (14, 15), et, suivant l'alimentation des signaux de position comme sortie, un premier signal d'information qui indique l'agencement d'un objet (2) à l'intérieur dudit intervalle de distances prédéterminé ;
le dispositif (1) de suppression de bruit de fond étant **caractérisé en ce qu'**il comprend :
- des moyens de recherche préliminaire (22) qui traitent de manière temporaire l'un des signaux de position uniquement afin de procurer, comme sortie, un deuxième signal d'information qui n'indique que la présence/absence d'un objet (2) indépendamment de la distance de l'objet (2) par rapport au dispositif (1) de suppression de bruit de fond ; et
- des moyens destinés à réaliser une comparaison entre le premier et le deuxième signal d'information, afin de vérifier l'agencement de l'objet à l'intérieur dudit intervalle de distances prédéterminé.

2. Dispositif de suppression de bruit de fond selon la revendication 1, **caractérisé en ce que** lesdits moyens de recherche préliminaire (22) comprennent un moyen de déséquilibre (26) et un moyen de sélection (25) qui commande le moyen de déséquilibre (26) afin d'exclure temporairement l'un desdits canaux d'amplification (14, 15) et de régler l'un desdits signaux de position sur une valeur prédéterminée (V_{RF}) ; ledit moyen de traitement (6) étant apte à fournir le deuxième signal d'information, qui indique la présence/absence d'un objet (2), comme sortie, par le biais du traitement du signal de position présent dans le canal (15, 14) non altéré.

3. Dispositif de suppression de bruit de fond selon la revendication 1, **caractérisé en ce que** lesdits moyens de recherche préliminaire (22) comprennent un moyen de commutation (23) et un moyen de sélection (25) qui peut commuter ledit moyen de commutation (23) afin d'exclure l'un desdits canaux d'amplification (14, 15) de manière temporaire et de régler l'un desdits signaux de position sur une valeur prédéterminée (V_{RF}) ; ledit moyen de traitement (6) étant apte à fournir le deuxième signal d'information qui indique la présence/absence d'un objet (2), comme sortie, par le biais du traitement du signal de position présent dans le canal inclus (15, 14).

4. Dispositif (1) de suppression de bruit de fond selon la revendication 3, **caractérisé en ce que** ledit moyen de sélection (25) commande l'ouverture de l'un desdits canaux d'amplification (14, 15) au choix, par la commutation dudit moyen de commutation (23) de sorte à exclure ledit canal d'amplification (14, 15) lui-même.

5. Dispositif de suppression de bruit de fond selon la revendication 4, dans lequel ledit moyen de commutation (23) comprend un commutateur (23), qui est connecté entre une borne de sortie (8) du photorécepteur (4) et l'un desdits canaux d'amplification (14, 15).

6. Dispositif de suppression de bruit de fond selon la revendication 3, **caractérisé en ce que** ledit moyen de sélection (25) commande la fermeture à un potentiel prédéterminé (V_{RF}) de l'un desdits canaux de d'amplification (14, 15), au choix, par la commutation dudit moyen de commutation (23) afin d'exclure ledit canal d'amplification (14, 15).

7. Dispositif de suppression de bruit de fond selon la revendication 6, dans lequel ledit moyen de commutation (23) comprend un commutateur (23), qui est connecté entre une borne de sortie (8) du photorécepteur (4) et une borne de terre (24) ayant un potentiel (V_{RF}) prédéterminé.

8. Dispositif de suppression de bruit de fond selon la revendication 3, dans lequel ledit moyen de sélection (25), commande au choix l'ouverture/fermeture du moyen de commutation (23), pour la sélection de l'un des modes de fonctionnement suivantes : un mode de fonctionnement à suppression de bruit de fond dans lequel le dispositif (1) de suppression de bruit de fond détecte la présence/absence d'un objet (2) à l'intérieur dudit intervalle de distances prédéterminé ; et un mode de fonctionnement avec détection dans lequel le dispositif (1) de suppression de bruit de fond réalise une recherche préliminaire, afin de ne détecter que la présence/absence d'un objet (2), indépendamment de la distance de l'objet par rapport au dispositif (1) de suppression de bruit de fond.

9. Dispositif de suppression de bruit de fond selon la revendication 1, **caractérisé en ce que** les moyens de recherche préliminaire (22) comprennent des moyens de mesure (27) qui sont connectés à l'un des canaux d'amplification (14, 15), afin de mesurer le signal de position respectif ; lesdits moyens de mesure (27) étant aptes à traiter le signal de position mesuré afin de fournir audit moyen de traitement (6) ledit deuxième signal d'information qui indique l'absence/présence d'un objet indépendamment de la distance de l'objet (2) par rapport au dispositif de suppression de bruit de fond.

10. Procédé visant à détecter la présence/absence d'un objet à l'intérieur d'un intervalle de distances prédéterminé comprenant les étapes suivantes qui consistent à :
- émettre par le biais d'un photoémetteur (3) un faisceau d'impulsions de lumière dans une direction prédéterminée ;
- recevoir par le biais d'un photorécepteur (4) un faisceau d'impulsions de lumière réfléchi par un objet, afin de fournir, comme sortie, une paire de signaux de position qui indiquent la distance d'un objet par rapport à un point de référence prédéterminé ; ledit photorécepteur (4) ayant une surface (7) qui est sensible à la position du faisceau de lumière incidente et comprend une première et une deuxième borne de sortie (8, 9) pour fournir lesdits signaux de position ;
- traiter (140) lesdits signaux de position afin de fournir, comme sortie, un premier signal d'information qui indique l'agencement d'un objet (2) à l'intérieur dudit intervalle de distances prédéterminé ;
le procédé étant **caractérisé en ce qu'**il comprend les étapes suivantes qui consistent à :
- réaliser une recherche préliminaire (110) pour l'objet, dans laquelle seul l'un desdits signaux de position est traité afin de fournir, comme sortie, un deuxième signal d'information qui n'indique que la présence/absence d'un objet indépendamment de la distance de l'objet (2) par rapport audit point de référence prédéterminé ; et
- réaliser une comparaison entre le premier et le deuxième signal d'information, afin de vérifier l'agencement de l'objet à l'intérieur dudit intervalle de distances prédéterminé.

11. Procédé selon la revendication 10, **caractérisé en ce que** ladite étape de recherche préliminaire (110) comprend l'étape consistant à altérer l'un desdits signaux de position afin de le régler sur un signal de valeur prédéterminée (V_{RF}) .

12. Procédé selon la revendication 10 ou 11, **caractérisé en ce que** ladite étape de recherche préliminaire (110) comprend l'étape qui consiste à ouvrir une borne de sortie (8) du photorécepteur (4) par le biais d'un moyen de commutation (23).

13. Procédé selon la revendication 10 ou 11, **caractérisé en ce que** ladite étape de recherche préliminaire (110) comprend l'étape qui consiste à connecter une borne de sortie (8) du photorécepteur (4) à une borne (24) ayant un potentiel (V_{RF}) prédéterminé, par le biais du moyen de commutation (23).

14. Procédé selon la revendication 10, **caractérisé en ce que** ladite étape de recherche préliminaire (110) comprend l'étape qui consiste à mesurer l'un desdits signaux de position.

15. Procédé selon l'une quelconque des revendications 10 à 14, **caractérisé en ce que** ladite étape de recherche préliminaire (110) passe avant l'étape de traitement (140) des signaux de position.

16. Procédé selon l'une quelconque des revendications 10 à 15, **caractérisé en ce que** ladite étape de traitement (140) de la paire de signaux de position est réalisée selon l'indication de la présence du deuxième signal d'information.

17. Procédé selon la revendication 14, **caractérisé en ce que**, si ladite étape de recherche préliminaire (110) détecte que l'objet est présent, ladite étape de recherche préliminaire (110) est suivie par ladite étape de traitement (140) de la paire de signaux de position, afin de fournir, comme sortie, le premier signal d'information qui indique l'agencement d'un objet (2) à l'intérieur dudit intervalle de distances prédéterminé.
